# FASCICULE DE BREVET EUROPEEN

(11) **EP 2 572 583 B1**
(45) Date de publication et mention de la délivrance du brevet: **24.02.2016**
(21) Numéro de dépôt: 12184830.3
(22) Date de dépôt: 18.09.2012
(51) Int. Cl.: A21B 3/04, F24C 15/32, A47J 27/04, A47J 37/00

(54) **Installation et procédé de traitement de produits alimentaires, tels que des produits alveoles, en vue notamment d'une expansion desdits produits**
Facility and method for treating food products, such as cellular products, in particular for expanding said products
Anlage und Verfahren zur Behandlung von Lebensmittelprodukten, wie beispielsweise Wabenprodukte, insbesondere im Hinblick auf eine Expansion dieser Produkte

(30) Priorité: 26.09.2011 FR 1158575
(43) Date de publication de la demande: 27.03.2013
(73) Titulaire: Institut National de Recherche en Sciences et Technologies pour l'Environnement et l'Agriculture (IRSTEA), 92160 Antony (FR)
(72) Inventeur: Lucas, Tiphaine, 35490 Sens-de-Bretagne (FR); Grenier, David, 35340 Liffré (FR); Le Ray, Dominique, 35490 Sens-de-Bretagne (FR)
(74) Mandataire: Godineau, Valérie

(56) Documents cités:
- EP-A1- 1 757 861
- EP-A1- 2 065 638
- EP-A2- 2 000 741
- WO-A1-89/04131
- WO-A1-92/02150
- WO-A1-95/04445
- US-A1- 2010 199 860

## Description

La présente invention concerne une installation et un procédé de traitement de produits alimentaires, tels que des produits alvéolés de boulangerie ou de pâtisserie, en vue notamment d'une expansion desdits produits.

Elle concerne plus particulièrement une installation comprenant :
- une enceinte de réception des produits à traiter équipée d'au moins une surface support des produits à traiter et de moyens de chauffage de ladite enceinte,
- des moyens d'aspiration des gaz contenus à l'intérieur de ladite enceinte de réception, aptes à créer un vide au moins partiel à l'intérieur de ladite enceinte de réception,
- des moyens de production et/ou d'admission de vapeur à l'intérieur de ladite enceinte de réception, lesdits moyens de production et/ou d'admission de vapeur comprenant une réserve de fluide à vaporiser, des moyens de chauffage du fluide à vaporiser contenu dans ladite réserve de fluide et pour lesdits moyens d'admission, des moyens d'amenée, à l'intérieur de l'enceinte de réception, du fluide vaporisé contenu à l'intérieur de la réserve de fluide, les moyens de production de vapeur et/ou le débouché des moyens d'amenée des moyens d'admission de vapeur à l'intérieur de l'enceinte de réception étant disposés au moins partiellement au-dessus de la surface support des produits à traiter et le débouché à l'intérieur de l'enceinte de réception des moyens d'aspiration des gaz contenus à l'intérieur de l'enceinte de réception étant disposé au moins partiellement dans ou au-dessous de la surface support des produits à traiter.

Le traitement thermique de produits alimentaires, en particulier alvéolés, tels que des produits de boulangerie ou de pâtisserie est bien connu à ceux versés dans cet art comme l'illustrent en particulier les brevets US 5,334,402 et WO 9504445. Les technologies développées permettent l'obtention de produits alvéolés de bonne qualité. Toutefois, on est à la recherche de solutions offrant une qualité améliorée en termes de volume d'expansion, de perte en eau, de moelleux. Il est également connu à travers le document WO 89/04131 une installation du type précité. Toutefois, cette installation présente certains inconvénients. En effet, en raison de la présence de moyens de pompage entre la réserve de fluide à vaporiser et l'enceinte de réception des produits à traiter, cette installation est difficile à piloter car elle nécessite un pilotage précis à la fois des moyens de génération de vapeur et de création de vide obligeant en pratique à une alimentation discontinue en vapeur de l'enceinte de produits à traiter, ce qui se traduit par une moindre qualité des produits. En outre, une telle installation est coûteuse car elle nécessite la présence d'au moins deux pompes, l'une pour l'alimentation en vapeur, l'autre pour la création de vide à l'intérieur de l'enceinte de réception des produits.

Un but de la présente invention est donc de proposer une installation et un procédé de traitement dont les conceptions permettent l'amélioration de la qualité de produits traités, en particulier lorsque l'installation et le procédé sont appliqués au traitement de produits alvéolés expansibles.

Un autre but de la présente invention est de proposer une installation dont la conception en termes de pilotage et d'architecture est simplifiée.

A cet effet, l'invention a pour objet une installation de traitement de produits alimentaires, tels que des produits alvéolés, en vue notamment d'une expansion desdits produits, ladite installation comprenant :
- une enceinte de réception des produits à traiter équipée d'au moins une surface support des produits à traiter et de moyens de chauffage,
- des moyens d'aspiration des gaz contenus à l'intérieur de ladite enceinte de réception, aptes à créer un vide au moins partiel à l'intérieur de ladite enceinte de réception,
- des moyens de production et/ou d'admission de vapeur à l'intérieur de ladite enceinte de réception, lesdits moyens de production et/ou d'admission de vapeur comprenant une réserve de fluide à vaporiser, des moyens de chauffage du fluide à vaporiser contenu dans ladite réserve de fluide et pour lesdits moyens d'admission, des moyens d'amenée, à l'intérieur de l'enceinte de réception, du fluide vaporisé contenu à l'intérieur de la réserve de fluide, les moyens de production de vapeur et/ou le débouché des moyens d'amenée des moyens d'admission de vapeur à l'intérieur de l'enceinte de réception étant disposés au moins partiellement au-dessus de la surface support des produits à traiter et le débouché à l'intérieur de l'enceinte de réception des moyens d'aspiration des gaz contenus à l'intérieur de l'enceinte de réception étant disposé au moins partiellement dans ou au-dessous de la surface supporte des produits à traiter caractérisée en ce que la réserve de fluide à vaporiser posée sur la surface support des produits à traiter des moyens de production et/ou la présence de fluide à vaporiser positionée à l'extérieur de l'enceinte des moyens d'admission de vapeur et l'intérieur de l'enceinte de réception sont en communication directe l'une avec l'autre de manière permanente.

En d'autres termes, l'installation est dépourvue d'organe d'obturation entre la réserve de fluide à vaporiser des moyens de production et/ou d'admission de vapeur et l'enceinte de réception des produits. Grâce à cette communication permanente entre réserve de fluide à vaporiser et enceinte de réception des produits , il est possible d'approvisionner de manière permanente l'intérieur de l'enceinte de réception des produits à traiter en vapeur d'eau pour réguler le vide formé sans fluctuation de pression préjudiciable à la qualité des produits à traiter. De même, les moyens d'aspiration des gaz peuvent réguler les moyens de production et/ou d'admission de vapeur. En effet, les moyens d'aspiration des gaz peuvent au cours de leur fonctionnement modifier la pression à l'intérieur de l'enceinte ce qui peut avoir une incidence sur la production de vapeur. Il est donc possible d'éviter les à coups en terme de production de vapeur tout en régulant la production de vapeur non plus à l'aide de moyens de pompage ou d'un autre type d'organe d'obturation comme dans l'état de la technique mais en agissant sur les moyens d'aspiration des gaz qui par action sur la pression régnant à l'intérieur de l'enceinte de réception des produits peuvent avoir une incidence sur la température d'ébullition du liquide à vaporiser et par suite sur l'évaporation elle-même. Il en résulte donc également une économie au niveau du chauffage nécessaire à la production de vapeur grâce à l'abaissement de la température d'ébullition ou de vaporisation du fluide à vaporiser, généralement de l'eau. Enfin, il en résulte une simplification de l'architecture de l'installation par rapport à des installations intégrant un organe d'obturation des moyens d'amenée de la vapeur à l'intérieur de l'enceinte de réception.

Généralement pour répondre à la définition telle que mentionnée ci-dessus, les moyens de production de vapeur et/ou le débouché des moyens d'amenée des moyens d'admission de vapeur sont disposés dans la partie haute de l'enceinte de réception des produits à traiter et le débouché des moyens d'aspiration des gaz contenus à l'intérieur de l'enceinte de réception des produits à traiter est disposé en partie basse de l'enceinte de réception des produits à traiter.

Grâce à cette conception, l'approvisionnement en vapeur des produits à traiter contenus dans l'enceinte s'opère par le dessus des produits et l'aspiration s'opère par le dessous des produits. On crée un flux de fluide à travers l'enceinte qui empêche ou limite un assèchement et/ou la formation d'une croûte en surface des produits. Il en résulte une qualité améliorée.

Cette gestion de la vapeur d'eau et du vide permet l'obtention parallèle d'une croûte qui ne contraint pas l'expansion globale, qui ne génère pas de zones à forte densité dans la mie et qui ne présente pas l'aspect finalement terne que produirait un traitement sous vide non associé à la production de la vapeur.

Lorsque l'installation est du type comprenant des moyens de production de vapeur à l'intérieur de l'enceinte de réception des produits à traiter, la réserve de fluide à vaporiser et les moyens de chauffage du fluide à vaporiser contenu dans ladite réserve de fluide à vaporiser sont disposés à l'intérieur de l'enceinte de réception. De préférence, les moyens de chauffage du fluide à vaporiser des moyens de production de vapeur et les moyens de chauffage de l'enceinte de réception sont au moins partiellement communs.

Dans ce mode de réalisation, de préférence les moyens de chauffage des moyens de production de vapeur et au moins une partie des moyens de chauffage de l'enceinte de réception sont des moyens de chauffage par conduction, de préférence intégrés à la surface de support des produits à traiter. Il en résulte une simplification de l'ensemble.

Lorsque l'installation est du type comprenant des moyens d'admission de vapeur, la réserve de fluide des moyens d'admission de vapeur est reliée à l'enceinte de réception par un simple conduit formant les moyens d'amenée , à l'intérieur de l'enceinte de réception, du fluide vaporisé contenu à l'intérieur de la réserve de fluide.

En d'autres termes, l'enceinte de réception contient la réserve de fluide à vaporiser et les moyens de chauffage des moyens de production de vapeur et/ou est reliée à la réserve de fluide des moyens d'admission de vapeur par un simple conduit formant les moyens d'amenée, à l'intérieur de l'enceinte de réception, du fluide vaporisé contenu à l'intérieur de la réserve de fluide.

Pour le chauffage de l'enceinte de réception de produits à traiter, les moyens de chauffage peuvent être divers et variés. Toutefois, de préférence, les moyens de chauffage de l'enceinte de réception comprennent des moyens de chauffage volumique, tels que des moyens de chauffage par micro-ondes et par radiation, tels que des moyens de chauffage à infrarouge.

Généralement, les moyens d'aspiration des gaz contenus à l'intérieur de l'enceinte de réception comprennent un circuit de circulation des gaz et une mise à l'échappement pilotable dudit circuit de circulation. Ce circuit de circulation des gaz, dont une extrémité débouche dans ladite enceinte de réception des produits à traiter pour former le débouché à l'intérieur de l'enceinte de réception des moyens d'aspiration des gaz, débouche par son autre extrémité à l'extérieur de l'enceinte de réception des produits à traiter. Lesdits moyens d'aspiration comprennent encore, disposée sur ledit circuit de circulation des gaz, au moins une pompe à vide pour une circulation par aspiration des gaz depuis l'intérieur en direction de l'extérieur de l'enceinte de réception des produits à traiter.

De préférence, le conduit de circulation de fluide des moyens d'amenée du fluide vaporisé des moyens d'admission de vapeur à l'intérieur de l'enceinte de réception de produit à traiter présente un tronçon qui entoure un tronçon du circuit de circulation des gaz des moyens d'aspiration des gaz.

Il en résulte une limitation de la condensation formée et une réduction de la consommation énergétique.

De préférence, l'installation comporte au moins un capteur de mesure de la pression à l'intérieur de l'enceinte de réception des produits à traiter, un capteur de température du fluide à vaporiser contenu dans la réserve de fluide à vaporiser et une unité de pilotage apte à recevoir des données d'entrée issues des capteurs de pression et de température et à délivrer des signaux de commande des moyens de production et/ou d'admission de vapeur et des moyens d'aspiration des gaz en fonction desdites données d'entrée, ladite unité de pilotage étant de préférence configurée pour délivrer des signaux de commande maintenant de manière permanente la pression de l'enceinte de réception à une pression inférieure à la pression atmosphérique.

Par unité de pilotage, on entend une unité de traitement électronique et/ou informatique apte à recevoir des données d'entrée issues des capteurs de pression et de température et à délivrer des signaux de commande des moyens de production et/ou d'admission de vapeur et des moyens d'aspiration des gaz en fonction desdites données d'entrée. L'unité de traitement électronique, telle que mentionnée ci-dessus, peut être formée par un microprocesseur ou une carte électronique. Lorsqu'il est précisé que l'unité est apte à réaliser une opération donnée telle que la réception de données d'entrée fournies par les capteurs, cela signifie que ladite unité comprend des instructions, de préférence informatiques, permettant de réaliser ladite opération.

L'installation utilise donc les moyens de production et/ou d'admission de vapeur pour partiellement réguler le vide formé en fonction de l'état thermodynamique recherché des gaz entourant les produits à traiter et éventuellement de la température régnant à l'intérieur de l'enceinte et réciproquement les moyens d'aspiration des gaz pour réguler au moins partiellement la production de vapeur.

Dans le cas d'une application à la fabrication de produits, en particulier de boulangerie, tels que du pain, l'enceinte de réception de produits à traiter est, de préférence, équipée de moyens de pétrissage des produits à traiter.

L'invention a encore pour objet un procédé de traitement de produits alimentaires, tels que des produits alvéolés, en vue notamment d'une expansion desdits produits, à l'aide d'une installation conforme à celle décrite ci-dessus, ledit traitement comprenant au moins une mise sous vide de l'enceinte de réception, un chauffage de ladite enceinte, et la production et/ou l'injection de vapeur d'eau à l'intérieur de l'enceinte, caractérisé en ce que, dans une zone s'étendant au-dessus de la surface support des produits à traiter, on produit de la vapeur d'eau à partir de la réserve de fluide des moyens de production de vapeur disposée à l'intérieur de l'enceinte de réception et/ou on admet de la vapeur d'eau à partir de la réserve de fluide des moyens d'admission de vapeur reliée à l'enceinte de réception par un simple conduit, en ce qu'on aspire les gaz contenus à l'intérieur de l'enceinte de réception au moins dans une zone s'étendant sous la surface support des produits à traiter et en ce qu'on maintient, au cours du traitement, la pression de l'enceinte de réception à une pression inférieure à la pression atmosphérique.

Ainsi, dans un tel procédé, on peut réguler la production de vapeur à partir du vide crée.

L'invention sera bien comprise à la lecture de la description suivante d'exemples de réalisation, en référence aux dessins annexés dans lesquels :
La figure 1 représente une vue schématique d'une installation conforme à l'invention ;
La figure 2 représente un diagramme représentant l'évolution au cours du temps :
   - de la température de l'air de l'enceinte par une courbe formée d'un trait et de traits orthogonaux au trait de la courbe
   - de la température de la sole par une courbe formée d'un trait et de points
   - de la teneur en eau relative de l'air de l'enceinte par une courbe pourvue de triangles et
   - de la pression régnant à l'intérieur de l'enceinte par une courbe formée d'un trait en gras.

Comme mentionné ci-dessus, l'installation, objet de l'invention, est plus particulièrement destinée au traitement de produits alvéolés, en particulier au traitement de produits de boulangerie ou de pâtisserie à base de pâte qui, lorsqu'ils sont soumis à une augmentation de température, s'expansent.

Les produits dont les ingrédients ne permettent pas un développement suffisant de l'extensibilité de la pâte et de la rétention des gaz d'expansion sont particulièrement concernés.

Pour les produits de boulangerie, viennoiserie, pâtisserie pour lesquels l'expansion est relativement bien maîtrisée par l'état actuel de la technique, une texture de mie différente, très aérée, peut être produite par la présente invention et être source d'innovation de produits, notamment dans le cas de produits feuilletés.

Indépendamment des produits à traiter, l'installation comprend :
- une enceinte 1 de réception des produits 10 à traiter, équipée d'au moins une surface 2 support des produits 10 à traiter et de moyens 3 de chauffage de l'air de l'enceinte,
- des moyens 5 d'aspiration des gaz contenus à l'intérieur de ladite enceinte 1 de réception,
- des moyens de production 4A et/ou d'admission 4B de vapeur à l'intérieur de ladite enceinte 1 de réception.

La surface 2 support des produits 10 à traiter délimite généralement un plan récepteur desdits produits. Cette surface 2 support peut être formée, par exemple, à l'aide d'une grille amovible ou d'un élément d'étagère ou d'une sole surélevée. Cette surface 2 support peut également être réalisée sous forme d'un plateau amovible ou non.

Cette surface 2 support divise l'enceinte 1 en deux zones, l'une disposée au-dessus de la surface 2 support de réception de produits à traiter dans laquelle sont disposés les produits à traiter reposant sur ladite surface 2 support, l'autre disposée au-dessous de la surface 2 support.

Une même enceinte 1 peut comporter plusieurs surfaces 2 support de produits à traiter disposées de manière superposée à l'intérieur de ladite enceinte.

L'enceinte 1 comporte encore des moyens 3 de chauffage de l'enceinte à la manière d'une enceinte de cuisson d'un four traditionnel. Ces moyens 3 de chauffage de l'enceinte peuvent comprendre des moyens de chauffage par radiation et des moyens de chauffage volumique, tels que des moyens de chauffage par micro-ondes. Ces moyens 3 de chauffage peuvent, en outre, comprendre des moyens de chauffage par conduction et, éventuellement, des moyens de chauffage par convection.

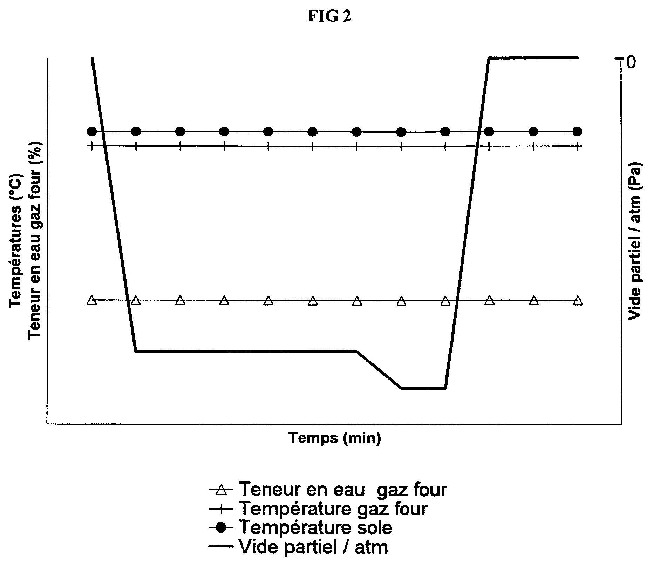

Dans l'exemple représenté, des moyens 3 de chauffage par conduction sont intégrés dans la sole de l'enceinte et sont formés par des résistances électriques. C'est donc l'évolution de la température de la sole chauffante qui est représentée à la figure 2 par une ligne formée d'un trait et de points.

Les moyens de chauffage par convection peuvent être formés de résistances électriques et d'un ventilateur disposés dans la partie supérieure de l'enceinte de réception des produits à traiter.

L'installation comporte encore des moyens 5 d'aspiration des gaz contenus à l'intérieur de l'enceinte de réception, ces moyens 5 étant aptes à créer un vide au moins partiel à l'intérieur de ladite enceinte 1 de réception.

Ces moyens 5 d'aspiration des gaz contenus à l'intérieur de l'enceinte 1 de réception comprennent un circuit 14 de circulation des gaz et une mise à l'échappement 15 pilotable dudit circuit 14 de circulation. Ce circuit 14 de circulation des gaz, dont une extrémité 14A débouche dans ladite enceinte 1 de réception des produits à traiter pour former le débouché 14A, à l'intérieur de l'enceinte 1 de réception, des moyens 5 d'aspiration des gaz, débouche par son autre extrémité à l'extérieur de l'enceinte 1 de réception des produits à traiter. Le débouché 14A des moyens d'aspiration des gaz à l'intérieur de l'enceinte qui correspond à l'ouverture d'aspiration des gaz desdits moyens d'aspiration des gaz à l'intérieur de l'enceinte peut être formé d'un orifice d'aspiration unique ou d'une pluralité d'orifices d'aspiration. Au moins l'un de ces orifices est disposé dans ou au-dessous de la surface support de réception des produits à traiter située au niveau le plus bas dans l'enceinte. Lesdits moyens 5 d'aspiration comprennent encore, disposée sur ledit circuit de circulation des gaz, au moins une pompe 12 à vide pour une circulation par aspiration des gaz depuis l'intérieur en direction de l'extérieur de l'enceinte 1 de réception des produits à traiter.

Le circuit 14 de circulation des gaz peut également être équipé d'un dispositif 13 de condensation apte à récupérer les condensats résultants de la mise sous vide.

Dans l'exemple représenté, le dispositif 13 de condensation se présente sous forme d'un tiroir de récupération.

La mise 15 à l'échappement est quant à elle réalisée à l'aide par exemple d'une électrovanne 15 qui permet de mettre en contact l'air extérieur avec l'intérieur de l'enceinte de réception des produits à traiter. Il est ainsi possible d'agir sur le fonctionnement de la pompe à vide en ouvrant plus ou moins l'électrovanne pour permettre à la pompe à vide de pomper à la fois à l'intérieur et à l'extérieur de l'enceinte de réception des produits.

Un capteur de pression est apte à mesurer la pression à l'intérieur de l'enceinte de réception des produits à traiter pour faciliter le pilotage de la pompe à vide. L'évolution de la pression à l'intérieur de l'enceinte est représentée par la courbe en traits gras à la figure 2.

L'installation comporte enfin des moyens de production 4A et/ou d'admission 4B de vapeur à l'intérieur de ladite enceinte 1 de réception. Ces moyens comprennent au moins une réserve 6A, 6B de fluide à vaporiser et des moyens 8A, 8B de chauffage du fluide à vaporiser contenu dans ladite réserve 6A, 6B.

Dans l'exemple représenté, l'enceinte comporte à la fois des moyens 4A de production de vapeur et des moyens 4B d'admission de vapeur. L'invention aurait pu s'appliquer de manière équivalente à une installation comprenant uniquement des moyens de production 4A de vapeur ou uniquement des moyens d'admission 4B de vapeur.

Dans le cas d'une enceinte équipée de moyens de production 4A de vapeur, ces derniers peuvent être formés d'une réserve, du genre récipient, remplie d'eau ou reliée par une liaison obturable à une source d'alimentation en eau, cette réserve, sous forme de récipient, étant posée sur la surface 2 support des produits à traiter.

Des moyens 8A de chauffage, tels qu'une résistance électrique, sont intégrés dans la surface 2 support des produits 10 à traiter et assurent l'ébullition du fluide contenu à l'intérieur du récipient formant réserve. La production de vapeur s'opère donc directement dans l'enceinte 1 de réception des produits à traiter.

La quantité de vapeur d'eau produite est fonction du fonctionnement des moyens de chauffage et des autres conditions dans l'enceinte 1 de réception, en particulier de la pression régnant dans l'enceinte 1, cette pression étant dépendante des moyens 5 d'aspiration des gaz. Les moyens de production de vapeur et les moyens d'aspiration des gaz interagissent donc entre eux. La quantité de vapeur d'eau produite peut être pilotée par pilotage des moyens 8A de chauffage à l'aide d'un capteur de mesure de la température de l'eau du récipient d'eau ou par mesure du taux d'humidité dans l'enceinte qui doit, de préférence, être maintenu sensiblement constant.

Dans un mode de réalisation de l'invention tel que représenté, où la réserve 6A de fluide à vaporiser et les moyens 8A de chauffage du fluide à vaporiser contenu dans ladite réserve 6A de fluide à vaporiser des moyens de production 4A de vapeur sont disposés à l'intérieur de l'enceinte 1 de réception, les moyens 8A de chauffage du fluide à vaporiser des moyens de production 4A de vapeur et les moyens 3 de chauffage de l'enceinte 1 de réception peuvent être au moins partiellement communs.

Dans ce cas, les moyens 8A de chauffage des moyens de production 4A de vapeur et au moins une partie des moyens 3 de chauffage de l'enceinte 1 de réception sont des moyens de chauffage par conduction, de préférence intégrés à la surface de support des produits 10 à traiter.

Dans le cas où l'enceinte 1 comporte des moyens 4B d'admission de vapeur à l'intérieur de ladite enceinte de réception, ces moyens d'admission comportent, outre une réserve 6B de fluide à vaporiser généralement positionnée à l'extérieur de l'enceinte et des moyens 8B de chauffage du fluide à vaporiser contenu dans ladite réserve 6B de fluide, des moyens 11 d'amenée, à l'intérieur de l'enceinte 1 de réception, du fluide vaporisé contenu à l'intérieur de la réserve 6B de fluide.

Ces moyens 11 d'amenée sont formés par un simple conduit qui relie la réserve 6 de fluide externe à l'enceinte à l'intérieur de l'enceinte 1 de réception à l'exclusion de tout organe d'obturation sur ladite liaison pour disposer d'une liaison ouverte entre réserve 6B de fluide et enceinte 1 de réception, cette liaison ouverte assurant une communication permanente entre réserve 6B de fluide et enceinte 1 de réception. La réserve 6B d'eau peut être reliée au réseau d'eau par une liaison 7 obturable ou pré-remplie.

A nouveau, la production de vapeur d'eau peut être contrôlée notamment par un capteur de mesure de la température de l'eau dans la réserve d'eau et la pression régnant à l'intérieur de l'enceinte 1 de réception et les moyens de chauffage peuvent être formés par une résistance électrique, ces moyens de chauffage pouvant être pilotés par une unité 16 de pilotage de l'installation.

Dans l'exemple représente, les moyens de production 4A de vapeur et/ou le débouché 11A des moyens 11 d'amenée des moyens d'admission 4B de vapeur à l'intérieur de l'enceinte 1 de réception sont disposés au moins partiellement au-dessus de la surface 2 support des produits 10 à traiter et au moins une partie du débouché 14A à l'intérieur de l'enceinte 1 de réception des moyens 4 d'aspiration des gaz contenus à l'intérieur de l'enceinte 1 de réception est disposé dans ou au-dessous de la surface 2 support des produits 10 à traiter.

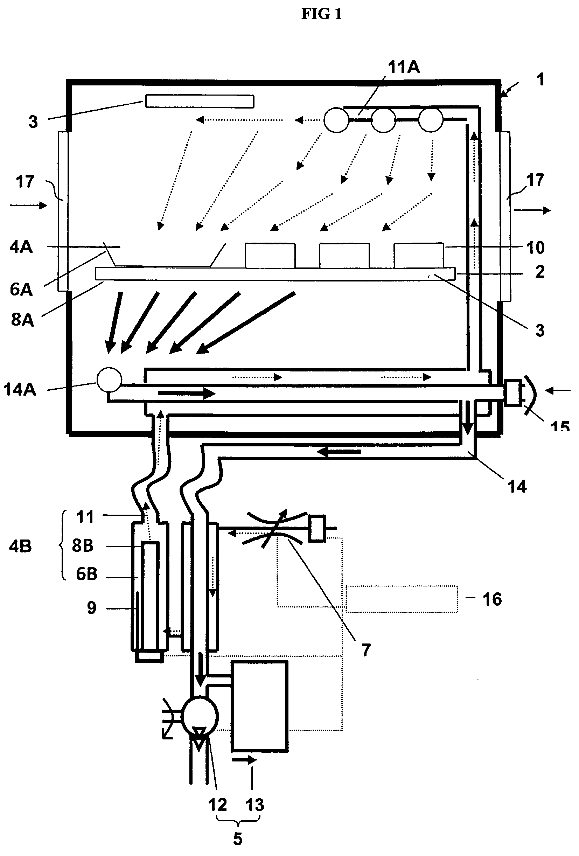

Il en résulte une alimentation systématique par le dessus en vapeur d'eau des produits à traiter, comme l'illustrent les flèches en pointillé à la figure 1, et une aspiration par le dessous des gaz, comme l'illustrent les flèches en trait plein à la figure 1. On crée ainsi un circuit de circulation de vapeur d'eau qui limite les risques de formation précoce de croûte rigide en surface des produits à traiter contenus à l'intérieur de l'enceinte.

Comme représenté, la réserve 6A, 6B de fluide à vaporiser des moyens de production 4A et/ou d'admission 4B de vapeur et l'intérieur de l'enceinte 1 de réception sont en communication l'une avec l'autre de manière permanente.

La production de vapeur d'eau est utilisée pour mieux réguler le vide créé et réciproquement. On s'affranchit ainsi d'un dispositif complexe avec moyens d'obturation pouvant amener à une alimentation discontinue en vapeur d'eau de l'enceinte et dans lequel le vide crée ne peut pas avoir d'incidence sur la production de vapeur.

Comme mentionné ci-dessus, les moyens 11 d'amenée du fluide vaporisé à l'intérieur de l'enceinte 1 de réception de produits à traiter comprennent un circuit de circulation de fluide entre la réserve 6B de fluide à vaporiser et l'intérieur de l'enceinte 1 de réception.

De préférence, le circuit de circulation de fluide présente un tronçon qui entoure un tronçon du circuit 14 de circulation des gaz des moyens 5 d'aspiration des gaz. Il en résulte une réduction de la consommation en énergie de l'installation.

Comme mentionné ci-dessus, pour la commande de l'installation, l'installation comporte au moins un capteur de mesure de la pression à l'intérieur de l'enceinte 1 de réception des produits à traiter, un capteur de température du fluide à vaporiser contenu dans la réserve 6 de fluide à vaporiser et une unité 16 de pilotage apte à recevoir des données d'entrée issues des capteurs de pression et de température et à délivrer des signaux de commande des moyens de production 4A et/ou d'admission 4B de vapeur et des moyens 5 d'aspiration des gaz en fonction desdites données d'entrée. Cette unité de pilotage est, de préférence, configurée pour délivrer des signaux de commande maintenant de manière permanente la pression de l'enceinte 1 de réception à une pression inférieure à la pression atmosphérique.

Enfin, l'enceinte 1 de réception de produits à traiter peut être équipée de moyens de pétrissage des produits à traiter en fonction du type de produits à traiter.

Le traitement proprement dit comprend au moins une mise sous vide de l'enceinte 1 de réception, un chauffage de ladite enceinte 1 et la production et/ou l'admission de vapeur d'eau à l'intérieur de l'enceinte 1, étant entendu qu'on produit et/ou on admet de la vapeur d'eau dans une zone s'étendant au-dessus de la surface 2 support des produits 10 à traiter, qu'on aspire les gaz contenus à l'intérieur de l'enceinte 1 de réception au moins dans une zone s'étendant sous la surface 2 support des produits 10 à traiter et en ce qu'on maintient, au cours du traitement, la pression de l'enceinte 1 de réception à une pression inférieure à la pression atmosphérique.

La figure 2 illustre un exemple d'évolution des courbes au cours d'un traitement. Dans un premier temps, l'enceinte de réception des produits à traiter étant préchauffée et l'hygrométrie relative de l'air de l'enceinte étant maintenue constante, on introduit les produits dans l'enceinte à travers un accès 17 de l'enceinte, on réalise un vide progressif à l'intérieur de l'enceinte puis un vide plus poussé est réalisé avant mise à l'échappement de l'enceinte.

Bien évidemment ceci ne constitue qu'un exemple de traitement et d'autres types de traitement peuvent être envisagés sans sortir de l'invention.

## Revendications

1. Installation de traitement de produits alimentaires, tels que des produits alvéolés, en vue notamment d'une expansion desdits produits, ladite installation comprenant :
- une enceinte (1) de réception des produits (10) à traiter équipée d'au moins une surface (2) support des produits (10) à traiter et de moyens (3) de chauffage,
- des moyens (5) d'aspiration des gaz contenus à l'intérieur de ladite enceinte (1) de réception, aptes à créer un vide au moins partiel à l'intérieur de ladite enceinte (1) de réception,
- des moyens de production (4A) et/ou d'admission (4B) de vapeur à l'intérieur de ladite enceinte (1) de réception, lesdits moyens de production (4A) et/ou d'admission (4B) de vapeur comprenant une réserve (6A ; 6B) de fluide à vaporiser, des moyens (8A ; 8B) de chauffage du fluide à vaporiser contenu dans ladite réserve (6) de fluide et pour lesdits moyens d'admission (4B), des moyens (11) d'amenée, à l'intérieur de l'enceinte (1) de réception, du fluide vaporisé contenu à l'intérieur de la réserve (6B) de fluide, les moyens de production (4A) de vapeur et/ou le débouché (11A) des moyens (11) d'amenée des moyens d'admission (4B) de vapeur à l'intérieur de l'enceinte (1) de réception étant disposés au moins partiellement au-dessus de la surface (2) support des produits (10) à traiter et le débouché (14A) à l'intérieur de l'enceinte (1) de réception des moyens (5) d'aspiration des gaz contenus à l'intérieur de l'enceinte (1) de réception étant disposé au moins partiellement dans ou au-dessous de la surface (2) support des produits (10) à traiter, **caractérisée en ce que** la réserve (6A) de fluide à vaporiser posée sur la surface (2) support des produits (10) à traiter des moyens de production (4A) et/ou la réserve (6B) de fluide à vaporiser positionnée à l'extérieur de l'enceinte (1) des moyens d'admission (4B) de vapeur et l'intérieur de l'enceinte (1) de réception sont en communication directe l'une avec l'autre de manière permanente.

2. Installation selon la revendication 1, du type comprenant des moyens (4A) de production de vapeur, **caractérisée en ce que** la réserve (6A) de fluide à vaporiser et les moyens (8A) de chauffage des moyens (4A) de production de vapeur sont disposés à l'intérieur de l'enceinte (1) de réception.

3. Installation selon l'une des revendications 1 ou 2,
**caractérisée en ce que** les moyens (8A) de chauffage du fluide à vaporiser des moyens de production (4A) de vapeur et les moyens (3) de chauffage de l'enceinte (1) de réception sont au moins partiellement communs.

4. Installation selon l'une des revendications 1 à 3,
**caractérisée en ce que** les moyens (8A) de chauffage des moyens de production (4A) de vapeur et au moins une partie des moyens (3) de chauffage de l'enceinte (1) de réception sont des moyens de chauffage par conduction, de préférence intégrés à la surface de support des produits (10) à traiter

5. Installation selon l'une des revendications 1 à 4, du type comprenant des moyens (4B) d'admission de vapeur, **caractérisée en ce que** la réserve (6B) de fluide des moyens (4B) d'admission de vapeur est reliée à l'enceinte (1) de réception par un simple conduit formant les moyens (11) d'amenée , à l'intérieur de l'enceinte (1) de réception, du fluide vaporisé contenu à l'intérieur de la réserve (6) de fluide.

6. Installation selon l'une des revendications 1 à 5,
**caractérisée en ce que** les moyens (3) de chauffage de l'enceinte (1) de réception comprennent des moyens de chauffage volumique, tels que des moyens de chauffage par micro-ondes et par radiation, tels que des moyens de chauffage à infrarouge.

7. Installation selon l'une des revendications 1 à 6,
**caractérisée en ce que** les moyens (5) d'aspiration des gaz contenus à l'intérieur de l'enceinte (1) de réception comprennent un circuit (14) de circulation des gaz et une mise à l'échappement (15) pilotable dudit circuit (14) de circulation, ce circuit (14) de circulation des gaz, dont une extrémité (14A) débouche dans ladite enceinte (1) de réception des produits à traiter pour former le débouché (14A) à l'intérieur de l'enceinte (1) de réception des moyens (5) d'aspiration des gaz, débouchant par son autre extrémité à l'extérieur de l'enceinte (1) de réception des produits à traiter, lesdits moyens (5) d'aspiration comprenant encore, disposée sur ledit circuit de circulation des gaz, au moins une pompe (12) à vide pour une circulation par aspiration des gaz depuis l'intérieur en direction de l'extérieur de l'enceinte (1) de réception des produits à traiter.

8. Installation selon la revendication 7 prise en combinaison avec la revendication 2,
**caractérisée en ce que** le conduit de circulation de fluide entre réserve (6B) de fluide à vaporiser et intérieur de l'enceinte (1) de réception des moyens (11) d'amenée du fluide vaporisé à l'intérieur de l'enceinte (1) de réception des produits à traiter des moyens (4B) d'admission de vapeur présente un tronçon qui entoure un tronçon du circuit (14) de circulation des gaz des moyens (5) d'aspiration des gaz.

9. Installation selon l'une des revendications 1 à 8,
**caractérisée en ce que** l'installation comporte au moins un capteur de mesure de la pression à l'intérieur de l'enceinte (1) de réception des produits à traiter, un capteur de température du fluide à vaporiser contenu dans la réserve (6A, 6B) de fluide à vaporiser et une unité de pilotage apte à recevoir des données d'entrée issues des capteurs de pression et de température et à délivrer des signaux de commande des moyens de production (4A) et/ou d'admission (4B) de vapeur et des moyens (5) d'aspiration des gaz en fonction desdites données d'entrée, ladite unité de pilotage étant de préférence configurée pour délivrer des signaux de commande maintenant, de manière permanente, la pression de l'enceinte (1) de réception à une pression inférieure à la pression atmosphérique.

10. Installation selon l'une des revendications 1 à 9,
**caractérisée en ce que** l'enceinte (1) de réception de produits à traiter est équipée de moyens de pétrissage des produits à traiter.

11. Procédé de traitement de produits alimentaires, tels que des produits alvéolés, en vue notamment d'une expansion desdits produits, à l'aide d'une installation conforme à l'une des revendications 1 à 9, ledit traitement comprenant au moins une mise sous vide de l'enceinte (1) de réception, un chauffage de ladite enceinte (1), et la production et/ou l'injection de vapeur d'eau à l'intérieur de l'enceinte (1),
**caractérisé en ce que** dans une zone s'étendant au-dessus de la surface (2) support des produits (10) à traiter, on produit de la vapeur d'eau à partir de la réserve (6A) de fluide des moyens (4A) de production de vapeur disposée à l'intérieur de l'enceinte (1) de réception et posée sur la surface (2) support des produits (10) à traiter et/ou on admet de la vapeur d'eau à partir de la réserve (6B) de fluide des moyens (4B) d'admission de vapeur positionnée à l'extérieur de l'enceinte (1) et reliée à l'enceinte (1) de réception par un simple conduit, **en ce qu'**on aspire les gaz contenus à l'intérieur de l'enceinte (1) de réception au moins dans une zone s'étendant sous la surface (2) support des produits (10) à traiter et **en ce qu'**on maintient, au cours du traitement, la pression de l'enceinte (1) de réception à une pression inférieure à la pression atmosphérique.

## Patentansprüche

1. Anlage für die Verarbeitung von Lebensmittelprodukten, wie Wabenprodukte, vor allem zwecks einer Expansion der Produkte, wobei die Anlage umfasst:
- einen Aufnahmebehälter (1) der zu verarbeitenden Produkte (10), der mit mindestens einer Stützfläche (2) der zu verarbeitenden Produkte (10) und mit Heizmitteln (3) ausgestattet ist,
- Ansaugmittel (5) der im Innern des Aufnahmebehälters (1) enthaltenen Gase, die imstande sind, ein mindestens teilweises Vakuum im Innern des Aufnahmebehälters (1) zu schaffen,
- Produktions- (4A) und/oder Empfangsmittel (4B) von Dampf im Innern des Aufnahmebehälters (1), wobei die Produktions- (4A) und/oder Empfangsmittel (4B) von Dampf ein Reservoir (6A; 6B) von zu verdampfenden Fluid, Heizmittel (8A; 8B) des in dem Fluidreservoir (6) enthaltenen zu verdampfenden Fluids und für die Empfangsmittel (4B) Zufuhrmittel (11) in das Innere des Aufnahmebehälters (1) des verdampften, im Innern des Fluidreservoirs (6B) enthaltenen Fluids umfassen, wobei die Dampf-Produktionsmittel (4A) und/oder die Ausmündung (11A) der Zufuhrmittel (11) der Dampf-Empfangsmittel (4B) im Innern des Aufnahmebehälter (1) mindestens teilweise über der Stützfläche (2) der zu verarbeitenden Produkte (10) angeordnet sind und die Ausmündung (14A) in das Innere des Aufnahmebehälters (1) der Ansaugmittel (5) der im Innern des Aufnahmebehälters (1) enthaltenen Gase mindestens teilweise in oder unter der Stützfläche (2) der zu verarbeitenden Produkte (10) angeordnet ist, **dadurch gekennzeichnet, dass** das Reservoir (6A) von zu verdampfendem Fluid, das auf der Stützfläche (2) der mit den Produktionsmitteln (4A) zu verarbeitenden Produkte (10) aufgestellt ist, und/oder das Reservoir (6B) von zu verdampfenden Fluid, das außerhalb des Behälters (1) der Dampf-Empfangsmittel (4B) positioniert ist, und das Innere des Aufnahmebehälters (1) ständig in direkter Kommunikation miteinander sind.

2. Anlage nach Anspruch 1 des Typs, der Dampf-Produktionsmittel (4A) umfasst, **dadurch gekennzeichnet, dass** das Reservoir (6A) von zu verdampfendem Fluid und die Heizmittel (8A) der Dampf-Produktionsmittel (4A) im Innern des Aufnahmebehälters (1) angeordnet sind.

3. Anlage nach einem der Ansprüche 1 oder 2,
**dadurch gekennzeichnet, dass** die Heizmittel (8A) des zu verdampfenden Fluids der Dampf-Produktionsmittel (4A) und die Heizmittel (3) des Aufnahmebehälters (1) mindestens teilweise gemeinsam sind.

4. Anlage nach einem der Ansprüche 1 bis 3,
**dadurch gekennzeichnet, dass** die Heizmittel (8A) der Dampf-Produktionsmittel (4A) und mindestens ein Teil der Heizmittel (3) des Aufnahmebehälters (1) Heizmittel durch Konduktion, vorzugsweise integriert in die Stützfläche der zu verarbeitenden Produkte (10), sind.

5. Anlage nach einem der Ansprüche 1 bis 4 des Typs, der Dampf-Empfangsmittel (4B) umfasst, **dadurch gekennzeichnet, dass** das Fluidreservoir (6B) der Dampf-Empfangsmittel (4B) mit dem Aufnahmebehälter (1) durch eine einfache Leitung verbunden ist, die die Zufuhrmittel (11) in das Innere des Aufnahmebehälters (1) des verdampften Fluids bildet, das im Innern des Fluidreservoirs (6) vorhanden ist.

6. Anlage nach einem der Ansprüche 1 bis 5,
**dadurch gekennzeichnet, dass** die Heizmittel (3) des Aufnahmebehälters (1) Volumen-Heizmittel wie Heizmittel durch Mikrowellen und durch Strahlung wie Infrarot-Heizmittel umfassen.

7. Anlage nach einem der Ansprüche 1 bis 6,
**dadurch gekennzeichnet, dass** die Ansaugmittel (5) der Gase, die im Innern des Aufnahmebehälters (1) vorhanden sind, eine Zirkulationsleitung (14) der Gase und einen steuerbaren Auslass (15) der Zirkulationsleitung (14) umfassen, wobei diese Gas-Zirkulationsleitung (14), von der ein Ende (14A) in den Aufnahmebehälter (1) der zu verarbeitenden Produkte ausmündet, um die Ausmündung (14A) in das Innere des Aufnahmebehälters (1) der Ansaugmittel (5) der Gase zu bilden, mit seinem anderen Ende außerhalb des Aufnahmebehälters (1) der zu verarbeitenden Produkte ausmündet, wobei die Ansaugmittel (5) ebenfalls, angeordnet auf der Gas-Zirkulationsleitung, mindestens eine Vakuumpumpe (12) für eine Zirkulation durch Ansaugen der Gase von innerhalb in Richtung außerhalb des Aufnahmebehälters (1) der zu verarbeitenden Produkte umfassen.

8. Anlage nach Anspruch 7, herangezogen in Kombination mit Anspruch 2,
**dadurch gekennzeichnet, dass** die Fluid-Zirkulationsleitung zwischen Reservoir (6B) von zu verdampfenden Fluid und dem Innern des Aufnahmebehälters (1) der Zufuhrmittel (11) des verdampften Fluids in das Innere des Aufnahmebehälters (1) der zu verarbeitenden Produkte der Dampf-Empfangsmittel (4A) einen Abschnitt aufweist, der einen Abschnitt der Gas-Zirkulationsleitung (14) der Gas-Ansaugmittel (5) umgibt.

9. Anlage nach einem der Ansprüche 1 bis 8,
**dadurch gekennzeichnet, dass** die Anlage mindestens einen Messsensor des Drucks im Innern des Aufnahmebehälters (1) der zu verarbeitenden Produkte, einen Temperatursensor des zu verdampfenden Fluids, das in dem Reservoir (6A, 6B) des zu verdampfenden Fluids enthalten ist, und eine Steuereinheit, die imstande ist, Eingangsdaten vom Druck- und Temperatursensor zu empfangen und Steuersignale der Produktions- (4A) und/oder Empfangsmittel (4B) von Dampf und der Gas-Ansaugmittel (5) in Abhängigkeit von den Eingangsdaten zu senden, aufweist, wobei die Steuereinheit vorzugsweise derart konfiguriert ist, um Steuersignale zu liefern, die den Druck des Aufnahmebehälters (1) ständig auf einem Druck unter dem atmosphärischen Druck halten.

10. Anlage nach einem der Ansprüche 1 bis 9,
**dadurch gekennzeichnet, dass** der Aufnahmebehälter (1) von zu verarbeitenden Produkten mit Knetmitteln der zu verarbeitenden Produkte ausgestattet ist.

11. Verfahren für die Verarbeitung von Lebensmittelprodukten wie Wabenprodukte, vor allem zwecks einer Expansion der Produkte, mit Hilfe einer Anlage nach einem der Ansprüche 1 bis 9, wobei die Verarbeitung mindestens ein Versetzen des Aufnahmebehälters (1) unter Vakuum, ein Heizen des Behälters (1) und die Produktion und/oder die Einleitung von Wasserdampf in das Innere des Behälters (1) umfasst,
**dadurch gekennzeichnet, dass** in einer Zone, die sich über der Stützfläche (2) der zu verarbeitenden Produkte (10) erstreckt, ab dem Fluidreservoir (6A) der Dampf-Produktionsmittel (4A), das im Innern des Aufnahmebehälters (1) angeordnet und auf der Stützfläche (2) der zu verarbeitenden Produkte (10) aufliegt, Wasserdampf produziert wird und/oder Wasserdampf ab dem Fluidreservoir (6B) der Dampf-Empfangsmittel (4B), das außerhalb des Behälters (1) positioniert ist und mit dem Aufnahmebehälter (1) durch eine einfache Leitung verbunden ist, aufgenommen wird, dass die Gase, die im Innern des Aufnahmebehälters (1) enthalten sind, mindestens in eine Zone ansaugt werden, die sich unter der Stützfläche (2) der zu verarbeitenden Produkte (10) erstreckt und dass bei der Verarbeitung der Druck des Aufnahmebehälters (1) auf einem Druck unter dem atmosphärischen Druck gehalten wird.

## Claims

1. A facility for treating food products, such as cellular products, in particular for expanding said products, said facility comprising:
- an enclosure (1) for receiving the products (10) to be treated equipped with at least one support surface (2) for the products (10) to be treated and heating means (3),
- means (5) for aspirating gases contained inside said receiving enclosure (1), able to create at least a partial vacuum inside said receiving enclosure (1),
- means for producing (4A) and/or admitting (4B) steam inside said receiving enclosure (1), said steam producing (4A) and/or admitting (4B) means comprising a reserve (6A; 6B) of fluid to be vaporized, means (8A; 8B) for heating the fluid to be vaporized contained in said fluid reserve (6) and for said admission means (4B), intake means (11) for bringing, inside the receiving enclosure (1), vaporized fluid contained in said fluid reserve (6B), the steam production means (4A) and/or the outlet (11 A) of the intake means (11) of the admission means (4B) admitting steam inside the receiving enclosure (1) being positioned at least partially above the support surface (2) of the products (10) to be treated and the outlet (14A) to the inside of the receiving enclosure (1) of the means (5) for aspirating gases contained inside the receiving enclosure (1) being positioned at least partially in or below the support surface (2) of the products (10) to be treated, **characterized in that** the reserve (6A) of fluid to be vaporized placed on the support surface (2) of the products (10) to be treated of the production means (4A) and/or reserve (6B) of fluid to be vaporized positioned outside the enclosure (1) of the steam admission means (4B) and the inside of the receiving enclosure (1) are in direct communication with one another at all times.

2. The facility according to claim 1, of the type comprising steam production means (4A), **characterized in that** the reserve (6A) of fluid to be vaporized and the heating means (8A) of the steam production means (4A) are positioned inside the receiving enclosure (1).

3. The facility according to one of claims 1 or 2,
**characterized in that** the heating means (8A) for the fluid to be vaporized of the steam production means (4A) and the heating means (3) of the receiving enclosure (1) are at least partially shared.

4. The facility according to one of claims 1 to 3,
**characterized in that** the heating means (8A) of the steam production means (4A) and at least part of the heating means (3) of the receiving enclosure (1) are conduction heating means, preferably integrated into the support surface of the products (10) to be treated.

5. The facility according to one of claims 1 to 4, of the type comprising steam admission means (4B), **characterized in that** the fluid reserve (6B) of the steam admission means (4B) is connected to the receiving enclosure (1) by a single duct forming the intake means (11), inside the receiving enclosure (1), for the vaporized fluid contained inside the fluid reserve (6).

6. The facility according to one of claims 1 to 5,
**characterized in that** the means (3) for heating the receiving enclosure (1) comprise volume heating means, such as microwave and radiation heating means, such as infrared heating means.

7. The facility according to one of claims 1 to 6,
**characterized in that** the aspiration means (5) for the gases contained inside the receiving enclosure (1) comprise a flow circuit (14) for the gases and a controllable exhaust (15) for said flow circuit (14), this gas flow circuit (14), one end (14A) of which emerges in said receiving enclosure (1) of the products to be treated to form the outlet (14A) inside the receiving enclosure (1) of the gas aspiration means (5), and the other end of which emerges outside the receiving enclosure (1) of the products to be treated, said aspiration means (5) further comprising, positioned on said gas flow circuit, at least one vacuum pump (12) for an aspiration flow of the gases from the inside toward the outside of the receiving enclosure (1) of the products to be treated.

8. The facility according to claim 7 combined with claim 2,
**characterized in that** the fluid flow duct between the reserve (6B) of fluid to be vaporized and the inside of the receiving enclosure (1) of the means (11) for bringing vaporized fluid into the receiving enclosure (1) of the products to be treated with steam admission means (4B) has a segment that surrounds a segment of the gas flow circuit (14) of the gas aspiration means (5).

9. The facility according to one of claims 1 to 8,
**characterized in that** the facility includes at least one sensor for measuring the pressure inside the receiving enclosure (1) of the products to be treated, a temperature sensor for the fluid to be vaporized contained in the reserve (6A, 6B) of fluid to be vaporized, and a control unit able to receive input data from pressure and temperature sensors and to deliver control signals of the steam production means (4A) and/or admission means (4B) and aspiration means (5) for the gases based on said input data, said control unit preferably being configured to deliver control signals continuously keeping the pressure of the receiving enclosure (1) at a pressure below the atmospheric pressure.

10. The facility according to one of claims 1 to 9,
**characterized in that** the enclosure (1) for receiving products to be treated is equipped with means for mixing the products to be treated.

11. A method for treating food products, such as cellular products, in particular for expanding sub-products, using a facility according to one of claims 1 to 9, said treatment comprising at least placing the receiving enclosure (1) under vacuum, heating said enclosure (1), and producing and/or injecting steam inside the enclosure (1),
**characterized in that** in a zone extending above the support surface (2) of the product (10) to be treated, steam is produced from the fluid reserve (6A) of the steam producing means (4A) positioned inside the receiving enclosure (1) and placed on the support surface (2) of the products (10) to be treated and/or steam is admitted from the fluid reserve (6B) of the steam admission means (4B) positioned outside the enclosure (1) and connected to the receiving enclosure (1) by a single duct, **in that** the gases contained inside the receiving enclosure (1) are aspirated at least in the zone extending below the support surface (2) of the products (10) to be treated and **in that** during the treatment, the pressure of the receiving enclosure (1) is kept at a pressure below the atmospheric pressure.
